(19) Europäisches Patentamt
European Patent Office
Office européen des brevets

(11) **EP 2 045 156 B1**

(12) **FASCICULE DE BREVET EUROPEEN**

(45) Date de publication et mention
de la délivrance du brevet:
**07.04.2010 Bulletin 2010/14**

(51) Int Cl.:
***B60T 8/32*** *(2006.01)*

(21) Numéro de dépôt: **08305590.5**

(22) Date de dépôt: **25.09.2008**

(54) **Procédé de gestion d'un système de freinage de véhicule automobile et véhicule équipé d'un système de freinage fonctionnant selon ce procédé**

Steuerungsverfahren des Bremssystems eines Kraftfahrzeugs und Kraftfahrzeug, das mit einem nach diesem Verfahren funktionierenden Bremssystem ausgestattet ist

Method of managing an automobile braking system and vehicle equipped with a braking system operating according to this method

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **04.10.2007 FR 0758077**

(43) Date de publication de la demande:
**08.04.2009 Bulletin 2009/15**

(73) Titulaire: **RENAULT S.A.S.**
**92100 Boulogne Billancourt (FR)**

(72) Inventeurs:
• **Ayma, Vincent**
**75015 Paris (FR)**
• **Camart, Jean-François**
**92800 Puteaux (FR)**

(56) Documents cités:
**DE-A1- 10 353 692     FR-A- 2 833 227
JP-A- 7 012 175**

**Description**

**DOMAINE TECHNIQUE**

L'invention se rattache au domaine des systèmes de freinage équipant des véhicules automobiles. Elle concerne plus spécifiquement un procédé de gestion des freinages d'urgence.

Elle vise en particulier un perfectionnement au système assurant une anticipation et une accentuation de l'effort de freinage lorsque est détectée une activation rapide et/ou particulièrement intense par l'utilisateur.

**TECHNIQUES ANTERIEURES**

D'une façon générale, et comme décrit dans le document FR-2 833 227, il est possible d'accentuer l'effort de freinage, par rapport à l'effort nominal qui est fonction de la seule position de la pédale de frein, lorsque est détectée une situation d'urgence.

Les situations d'urgence peuvent être évaluées de différentes manières, et en combinant le cas échéant plusieurs critères. Ainsi, en dehors des systèmes complexes qui intègrent des détecteurs de proximité de véhicule avoisinants, le document précité décrit un procédé dans lequel on prend en compte une analyse des mouvements intervenant au niveau des pédales d'accélérateur et de freinage. En effet, une remontée brusque de la pédale d'accélérateur préfigure souvent un enfoncement intense de la pédale de frein, à partir duquel seulement l'effort de freinage est commandé.

C'est pourquoi il peut être utile d'anticiper cette situation, en considérant que la remontée brusque de la pédale d'accélération est significative d'une situation d'urgence, dans laquelle le freinage devra donc être géré de façon particulière.

Les systèmes envisagés, ainsi que celui décrit dans la demande de brevet FR-06.55414 et non encore publiée à ce jour, mettent en oeuvre une surveillance de la vitesse de remontée de la pédale d'accélérateur. Lorsque cette vitesse dépasse un seuil prédéterminé, on décide alors que la situation correspond à un cas d'urgence, dans lequel le freinage accentué devra être mis en oeuvre. Bien entendu, d'autres paramètres que la seule surveillance de la remontée de la pédale d'accélérateur, peuvent être également surveillés. On peut notamment citer la détection de mouvements rapides des pieds à proximité du pédalier, ou bien encore la surveillance du décalage temporel entre le relâchement de l'accélérateur et l'appui sur la pédale de frein.

En pratique, les grandeurs relatives aux variations d'enfoncement des pédales ne sont pas directement disponibles, mais résultent de calculs effectués à partir d'une mesure représentative de la position de la pédale. L'incrément entre deux mesures consécutives, rapporté à la période d'échantillonnage donne une évaluation de la dérivée de la position de la pédale, c'est-à-dire sa vitesse d'enfoncement ou de relâchement. Or, ce type de calcul n'est pas réellement robuste vis-à-vis des bruits sur les signaux issus des capteurs mesurant la position des pédales. Dans la mesure où le résultat de ce calcul aura une influence sur la qualification de la situation d'urgence, ce manque de robustesse peut être problématique. Pour réduire les inconvénients dus à la faible robustesse de ce calcul, plusieurs solutions peuvent être envisagées, sans donner réelle satisfaction.

Ainsi, il est possible d'ajouter des capteurs supplémentaires pour détecter des situations d'urgence de manière redondante. On peut ainsi implanter des capteurs extérieurs de détection d'environnement, par exemple pour évaluer les distances par rapport au véhicule précédent. Toutefois, cette solution engendre une complexité supplémentaire du système, et en augmente le coût.

Une autre solution consiste à augmenter les seuils au-delà desquels les variations sont considérées comme critiques. En augmentant ces seuils, on diminue l'efficacité de la détection, puisque certaines situations d'urgence ne sont alors plus considérées comme telles. On conçoit donc qu'une telle solution réduit fortement l'intérêt de la détection de pré-crash.

Une autre solution vise à diminuer l'accentuation du freinage pour limiter son influence dans les cas où les situations d'urgence sont faussement détectées. On conçoit également que les performances du système sont alors amoindries.

En d'autres termes, une détection de situation d'urgence pour remédier à des fausses alarmes, nécessite la réalisation d'actions très douces pour ne pas gêner le conducteur dans le cas de fausses alarmes.

Un objectif de l'invention est donc d'obtenir un signal représentatif de la vitesse d'enfoncement ou de relâchement des pédales qui soit robuste vis-à-vis des bruits sur les signaux issus des capteurs.

Par ailleurs, le calcul d'une vitesse d'enfoncement ou de relâchement des pédales, qui est lié à l'incrément sur une période d'échantillonnage, a une influence sur le réglage du seuil de déclenchement. En effet, pour chaque fréquence d'échantillonnage différente, il est nécessaire de régler les seuils en conséquence. Ainsi, un autre objectif de l'invention est d'obtenir un signal de vitesse qui ne nécessite pas une mise au point du seuil de déclenchement pour chaque fréquence d'échantillonnage, en fonction en particulier des différentes versions de véhicule et de motorisation.

**EXPOSE DE L'INVENTION**

L'invention concerne donc un procédé de gestion d'un système de freinage de véhicule automobile. Ce système est apte à générer un effort de freinage accentué, supérieur à l'effort nominal dont l'intensité est fixée par la seule position de la pédale de frein. Ce freinage accentué est déclenché dans les cas d'une situation d'urgence, déterminée notamment par l'analyse de la vitesse de variation d'une grandeur physique mesurée par un capteur équipant le système de freinage et de préférence le système de pédalier.

Parmi ces grandeurs physiques, on peut citer en particulier la position d'enfoncement de la pédale d'accélérateur, ou de la pédale de frein, voire encore la pression régnant dans le maître-cylindre.

Conformément à l'invention, l'évaluation de la vitesse de variation de la grandeur se fait par application d'une combinaison de filtrages. Plus précisément, cette combinaison comporte un filtrage dérivatif, et un filtrage passe-bas d'ordre supérieur ou égal à 2.

Autrement dit, l'invention consiste, pour évaluer la dérivée de la grandeur mesurée, à appliquer non seulement un filtre dérivatif, mais à combiner ce filtrage avec un filtrage passe-bas d'un ordre supérieur à 2, de telle sorte qu'en haute fréquence, le filtrage passe-bas est prépondérant.

En d'autres termes, le calcul de la fonction dérivée se fait de manière surprenante en assurant non pas un filtrage dérivé, mais une intégration des bruits en haute fréquence, ce qui permet toutefois d'obtenir une dérivation correcte aux fréquences de travail.

Avantageusement, cette fonction est quasiment indépendante de la fréquence d'échantillonnage de la variable d'entrée, dès lors que cette fréquence d'échantillonnage est supérieure au double de la fréquence de coupure du filtre passe-bas. Ce choix permet une adaptation très aisée sur l'ensemble de motorisation qui mesure la grandeur d'enfoncement des pédales par exemple à des fréquences différentes. Ainsi, avec un seul réglage du filtrage, la variable correspondant à la vitesse de variation aura des valeurs semblables en fonction des différents modèles et autres motorisations, pour des mouvements de lever de pied équivalents. Il est ainsi possible de ne régler qu'une seule fois le seuil de déclenchement d'un critère d'activation du système précrash.

En pratique, et comme déjà évoqué, différentes grandeurs peuvent faire l'objet du calcul dérivatif, et en particulier la position de la pédale d'accélérateur pour identifier une vitesse de relâchement, ou bien encore la position de la pédale de frein, pour détecter un enfoncement brusque, ou bien encore la pression qui règne dans le maître-cylindre.

Avantageusement en pratique, il est possible d'utiliser un filtrage passe-bas d'ordre supérieur à 2, de manière à couper de façon plus notable les bruits aux hautes fréquences.

Ce mode de calcul d'une fonction dérivée d'une grandeur peut s'appliquer de façon itérative, pour calculer par exemple des dérivées secondes ou encore supérieures. Dans ce cas, la vitesse de variation ainsi calculée est utilisée comme variable d'entrée de la combinaison de filtrages dérivatifs et passe-bas.

## BREVE DESCRIPTION DES FIGURES

La manière de réaliser l'invention, ainsi que les avantages qui en découlent, ressortiront bien de la description du mode de réalisation qui suit, à l'appui des figures annexées dans lesquelles :

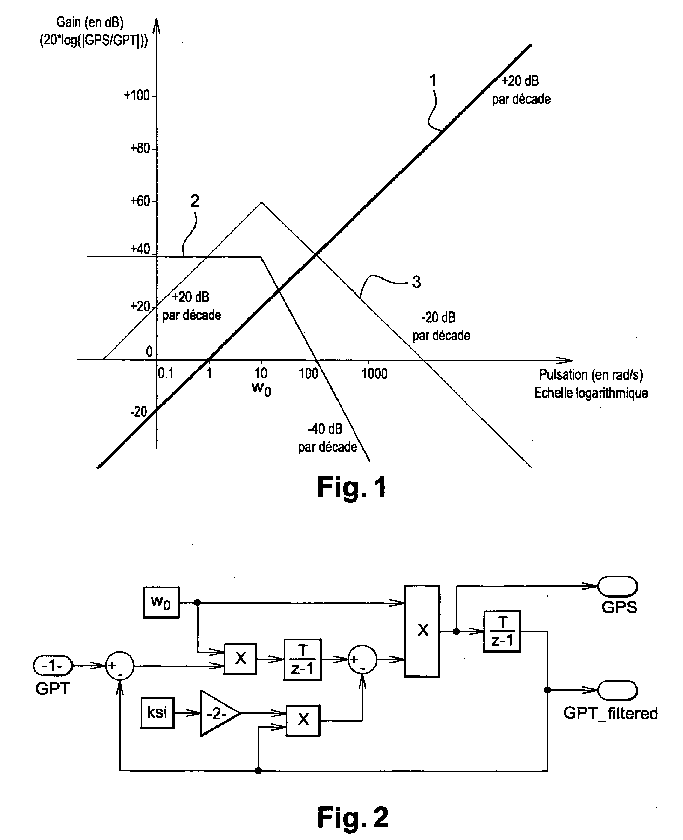

■ la figure 1 est une courbe montrant le gain de chacun des étages de filtrage, et du filtrage résultant de leur combinaison ;
■ la figure 2 est un diagramme montrant les différents étages de filtrage mis en oeuvre assurant une variable en vue d'obtenir une régulation de sa fonction élevée.

## MANIERE DE REALISER L'INVENTION

Comme déjà évoqué, l'invention vise un mode de calcul permettant de calculer la dérivée temporelle d'une grandeur mesurée, en s'affranchissant autant que faire ce peut de la fréquence d'échantillonnage de la mesure.

La fonction dérivée, dont le gain est illustré par la courbe 1 de la figure 1, correspond à un gain de 20 dB par décade, sur toute la plage de fréquences.

Conformément à l'invention, cette action dérivée est coupée aux hautes fréquences, ce qui permet en particulier de filtrer le signal d'entrée. En effet, le bruit présent sur le signal d'entrée peut engendrer, après dérivation et à très haute fréquence, des phénomènes de dérive et/ou de saturation préjudiciables à la qualité de la chaîne globale de traitement du signal.

En pratique, les données en ordre mesuré peuvent être issues de capteurs et en particulier de potentiomètres dont la valeur de la résistance est fonction de la position de la pédale. Toutefois, d'autres types de capteurs, et de manière plus générale d'autres grandeurs physiques, peuvent être mesurés et traités selon le même principe.

Conformément à l'invention, le filtrage dérivatif est associé avec un filtrage du deuxième ordre, possédant une pulsation $\omega$ et un amortissement $\xi$. La courbe 2 illustrée à la figure 1 correspond au gain d'un tel filtre, qui comporte donc une pente de -40 dB par décade au-delà de la fréquence de pulsations de coupure $\omega_0$.

La combinaison de ces deux filtrages, dont la fonction de transfert est la suivante :

$$G(s) = \frac{K.s}{1 + 2\xi \dfrac{s}{\omega_0} + \dfrac{s^2}{\omega_0^2}}$$ possède donc un gain tel qu'illustré à la courbe 3 de la figure 1.

Un tel filtrage combiné permet d'une part, un filtrage des bruits en haute fréquence avec d'autre part, l'assurance d'obtenir une dérivation correcte aux fréquences pertinentes, entre 50 et 100 Hz par exemple.

Complémentairement, cette fonction de filtrage combinée est quasiment indépendante de la fréquence d'échantillonnage, dès lors que celle-ci est choisie nettement plus élevée que la fréquence propre du filtre ($\omega_0$/

2π).

Ainsi, un tel filtrage permet une adaptation très aisée sur l'ensemble des motorisations qui n'échantillonnent pas toutes les données caractéristiques à la même fréquence. Ainsi, avec un seul réglage du filtre du deuxième ordre, c'est-à-dire en réglant les valeurs de pulsation $\omega_0$ et d'amortissement $\xi$, la variable de sortie correspondant à l'évaluation de la dérivée d'ordre mesuré, aura donc des valeurs semblables en fonction des diverses fréquences d'échantillonnage. Le réglage du seuil du déclenchement du système d'assistance de freinage en cas d'urgence est donc identique pour toutes ces fréquences d'échantillonnage.

En pratique, la fonction de transfert du filtrage caractéristique combiné peut être implémentée par une représentation discrète, composée de deux intégrateurs discrets, et de blocs algébriques comme illustré à la figure 2. Bien entendu, en pratique, un tel filtrage peut être obtenu par voie logicielle et/ou matérielle, sans sortir du cadre de l'invention.

Il ressort de ce qui précède que le filtrage conforme à l'invention permet de réaliser des fonctions de dérivation avec une robustesse qui les rend à la fois indépendantes des fréquences d'échantillonnage, mais également de bruits pouvant apparaître au niveau du signal issu du capteur. Les performances du système d'assistance du freinage en cas d'urgence peuvent ainsi être optimisées, puisque les cas de fausses alarmes sont nettement réduits. En outre, un tel système est quasi-insensible à la fréquence d'échantillonnage de la mesure.

**Revendications**

1. Procédé de gestion d'un système de freinage de véhicule automobile, ledit système étant apte à générer un effort de freinage accentué, supérieur à l'effort nominal dont l'intensité est fixée par la seule position de la pédale de frein, ledit freinage accentué étant déclenché dans le cas d'une situation d'urgence déterminée notamment par l'analyse de la vitesse de variation d'une grandeur physique mesurée par un capteur équipant le système de freinage, de préférence le système de pédalier, *caractérisé* **en ce que** l'évaluation de la vitesse de variation de ladite grandeur se fait par application à ladite grandeur d'une combinaison d'un filtrage dérivatif et d'un filtrage passe-bas d'ordre supérieur ou égal à 2.

2. Procédé selon la revendication 1, *caractérisé* **en ce que** le filtrage passe-bas est d'ordre 2.

3. Procédé selon la revendication 1, *caractérisé* **en ce que** la fréquence de coupure du filtre passe-bas est inférieure au double de la fréquence d'échantillonnage de la mesure de ladite grandeur.

4. Procédé selon la revendication 1, *caractérisé* **en ce que** la grandeur physique mesurée est la position de la pédale d'accélérateur.

5. Procédé selon la revendication 1, *caractérisé* **en ce que** la grandeur physique mesurée est la position de la pédale de frein.

6. Procédé selon la revendication 1, *caractérisé* **en ce que** la grandeur physique mesurée est la pression régnant dans le maître-cylindre.

7. Procédé selon la revendication 1, *caractérisé* **en ce que** la vitesse de variation est utilisée comme variable d'entrée de ladite combinaison de filtrages, afin d'évaluer une dérivée seconde de ladite grandeur.

8. Véhicule équipé d'un système de freinage fonctionnant selon le procédé de l'une des revendications 1 à 7.

**Claims**

1. Method for managing a braking system of a motor vehicle, the said system being capable of generating an accentuated braking force, greater than the nominal force the intensity of which is fixed solely by the position of the brake pedal, the said accentuated braking being initiated in the case of an emergency situation determined notably by the analysis of the speed of variation of a physical magnitude measured by a sensor fitted to the braking system, preferably the pedal system, **characterized in that** the speed of variation of the said magnitude is evaluated by applying to the said magnitude a combination of a derivative filtering and a low-pass filtering of the second order or higher.

2. Method according to Claim 1, **characterized in that** the low-pass filtering is of the second order.

3. Method according to Claim 1, **characterized in that** the cut-off frequency of the low-pass filter is less than twice the sampling frequency of the measurement of the said magnitude.

4. Method according to Claim 1, **characterized in that** the physical magnitude measured is the position of the accelerator pedal.

5. Method according to Claim 1, **characterized in that** the physical magnitude measured is the position of the brake pedal.

6. Method according to Claim 1, **characterized in that** the physical magnitude measured is the pressure prevailing in the master cylinder.

**7.** Method according to Claim 1, **characterized in that** the speed of variation is used as an input variable of the said filtering combination, in order to evaluate a second differential coefficient of the said magnitude.

**8.** Motor vehicle fitted with a braking system operating according to the method of one of Claims 1 to 7.

**Patentansprüche**

**1.** Verfahren zur Verwaltung eines Bremssystems eines Kraftfahrzeugs, wobei das System eine verstärkte Bremskraft erzeugen kann, die größer ist als die Nennkraft, deren Stärke allein durch die Bremspedalstellung festgelegt ist, wobei die verstärkte Bremsung in einem Notfall ausgelöst wird, der insbesondere durch die Analyse der Veränderungsrate einer physikalischen Größe bestimmt wird, die durch einen am Bremssystem, insbesondere am Pedalsystem, vorgesehenen Sensor gemessen wird, **dadurch gekennzeichnet, dass** die Ermittlung der Änderungsrate der Größe durch Beaufschlagen der Größe mit einer Kombination aus einer Ableitungs- und einer Tiefpassfilterung 2. oder höherer Ordnung erfolgt.

**2.** Verfahren nach Anspruch 1, **dadurch gekennzeichnet, dass** die Tiefpassfilterung 2. Ordnung ist.

**3.** Verfahren nach Anspruch 1, **dadurch gekennzeichnet, dass** die Grenzfrequenz des Tiefpassfilters kleiner als das Doppelte der Abtastfrequenz der Messung der Größe ist.

**4.** Verfahren nach Anspruch 1, **dadurch gekennzeichnet, dass** die gemessene physikalische Größe die Stellung des Fahrpedals ist.

**5.** Verfahren nach Anspruch 1, **dadurch gekennzeichnet, dass** die gemessene physikalische Größe die Stellung des Bremspedals ist.

**6.** Verfahren nach Anspruch 1, **dadurch gekennzeichnet, dass** die physikalische Größe der im Hauptzylinder herrschende Druck ist.

**7.** Verfahren nach Anspruch 1, **dadurch gekennzeichnet, dass** die Änderungsrate als Eingangsgröße für die Filterungskombination verwendet wird, um eine zweite Ableitung der Größe zu ermitteln.

**8.** Mit einem gemäß dem Verfahren nach einem der Ansprüche 1 bis 7 betriebenen Bremssystem ausgestattetes Fahrzeug.

Fig. 1

Fig. 2

**EP 2 045 156 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2833227
- FR 0655414